# EUROPÄISCHE PATENTSCHRIFT

(11) **EP 1 334 461 B1**
(45) Veröffentlichungstag und Bekanntmachung des Hinweises auf die Patenterteilung: **05.07.2006**
(21) Anmeldenummer: 01977973.5
(22) Anmeldetag: 23.10.2001
(51) Int. Cl.: G06K 9/00, G06T 5/00, G01N 15/14

(54) **VERFAHREN UND ANORDNUNG ZUR UNTERSUCHUNG VON ZELLEN**
METHOD AND SYSTEM FOR ANALYZING CELLS
PROCEDE ET DISPOSITIF D'ANALYSE DE CELLULES

(30) Priorität: 24.10.2000 AT 18212000
(43) Veröffentlichungstag der Anmeldung: 13.08.2003
(73) Patentinhaber: TissueGnostics GmbH, 1020 Wien (AT)
(72) Erfinder: Steiner, Georg, 2294 Marchegg (AT); Ecker, Rupert, 1220 Wien (AT)
(74) Vertreter: Wildhack, Helmut
(86) Internationale Anmeldenummer: PCT/AT2001/000343
(87) Internationale Veröffentlichungsnummer: WO 2002/035207

(56) Entgegenhaltungen:
- WO-A-98/38490
- US-A- 5 790 692
- US-A- 5 834 203
- US-A- 5 848 177
- STEINER G E ET AL: "Automated data acquisition by confocal laser scanning microscopy and image analysis of triple stained immunofluorescent leukocytes in tissue" JOURNAL OF IMMUNOLOGICAL METHODS, ELSEVIER SCIENCE PUBLISHERS B.V.,AMSTERDAM, NL, Bd. 237, Nr. 1-2, April 2000 (2000-04), Seiten 39-50, XP004192493 ISSN: 0022-1759

## Beschreibung

Die Erfindung betrifft ein Verfahren gemäß dem Oberbegriff des Patentanspruches 1 sowie eine Anordnung gemäß dem Oberbegriff des Patentanspruches 12.

Die Zuordnung von Zellen im Gewebsverband zu einem exakt definierten Zelltyp (z.B. Epithelzelle, Muskelzelle, Fibroblast, Leukozyt, Karzinomzelle, Lymphomzelle) und die Erfassung von deren funktionellen Eigenschaften erfolgt, wenn die morphologischen Charakteristika nicht ausreichen, durch immunhistologische Untersuchungen. Dabei werden hoch spezifische Antikörper die gegen charakteristische zelltypspezifische Antigene gerichtet sind eingesetzt. Aus der Färbung können entsprechende Schlüsse gezogen werden.

Bislang mangelt es an einem objektiven, automatisierten Analysesystem, welches z.B. angibt, wie viele Zellen in einem Präparat vorhanden sind, wie viele dieser Zellen mit dem(n) jeweiligen Antikörper(n) (im Falle von Mehrfachfärbungen) reagieren und wie stark diese Reaktion(en) ist (sind). Stand der Technik ist es, dass der Untersuchende entweder rein optisch eine repräsentative Anzahl von Zellen auszählt und deren Färbeintensität abschätzt oder aber er verwendet eine herkömmliche Bildverarbeitungssoftware um die Färbeintensität exakt zu messen, wobei er jedoch gezwungen ist, das zu vermessende Areal der Zelle manuell zu definieren. Will der Untersuchende eine quantitative Untersuchung bei 100 Zellen und 100 Zellkernen vornehmen, so muss er 100 Zellen und 100 Kerne einzeln umringeln und kann dann seine Messung durchführen. Diese Messungen geben jedoch in den seltensten Fällen Aufschluss über doppel-, dreifach-, usw. Reaktivitäten und sind mit einem enormen Zeitaufwand verbunden, wobei der Abgleich mit Negativ- und Positivkontrollen, die für die Vergleichbarkeit wichtig sind, den Arbeitsaufwand exponentiell ansteigen lassen.

Dieser Umstand ist hauptverantwortlich dafür, dass die Resultate immunhistologischer Untersuchungen noch immer als nicht wirklich wissenschaftlich standardisierbar und vergleichbar gelten und immer mit dem Manko der Subjektivität behaftet sind, während die wesentlich jüngere Technik der Durchflusszytometrie (ein vergleichbares Analysesystem nur für Einzelzellen in Suspension) diesen Sprung schon lange geschafft hat. Kommen derzeit bei durchflusszytometrischen Untersuchungen routinemäßig 4Fachfärbungen zum Einsatz wobei genau die prozentuelle Verteilung und Färbeintensität jeder Subpopulation beliebig bestimmt werden kann, so stehen die Auswertemethoden der Immunhistologie noch immer am Stand der Technik von vor zwanzig Jahren und es werden in der überwiegenden Mehrzahl Mittel, wie ein Kreuz-, zwei Kreuzpositive Zellen, verwendet, um die visuell ermittelten Resultate auszudrücken.

Ziel der Erfindung ist es, eine automatische Erkennung von einzelnen Zellen und deren Bestandteile wie Zellkern, Zytoplasma und Zellmembran in dichten geschlossenen Zellverbänden zu erreichen und in den jeweiligen Bestandteilen exakte Messungen durchzuführen, ohne dabei den räumlichen Bezug zu den Zellen aber auch deren Lokalisation im Gewebsverband zu verlieren. Damit soll die Immunhistologie auf die Stufe der Durchflusszytometrie gestellt werden, wobei, bezogen auf den Datenabgleich mit Positiv-und Negativkontrollen, die Aufschlüsselung der Populationen in einfach- oder mehrfachreaktive Subpopulationen sowie die quantitative Erfassung der Färbeintensitäten, die Immunhistologie jedoch die Durchflusszytometrie in der Informationsvielfalt bei weitem übertrifft, da sie eine räumliche Zuordnung zulässt und zwar nicht nur beschränkt auf die Lokalisation der jeweiligen Zelle im Zellverband sondern auch innerhalb der Zelle (membranös, zytoplasmatisch oder nukleär).

Erfindungsgemäß ist ein Verfahren der eingangs genannten Art durch die Merkmale des Kennzeichens des Anspruches 1 charakterisiert. Eine Anordnung der eingangs genannten Art ist erfindungsgemäß durch die Merkmale des Anspruches 12 charakterisiert.

Es werden zumindest eine nukleäre Färbung, wobei jede gebräuchliche Zellkernfärbung angewendet werden kann, und zumindest eine Färbung einer Zielstruktur vorgenommen, vorzugsweise mit einem Antikörper oder Antiserum. Es ist dabei nicht wichtig, an welcher zellulären Struktur dieser Antikörper oder eine Gensonde od.dgl. bindet, solange, wie es in der Regel auch der Fall ist, sich das Reaktionsprodukt farblich von der nukleären Färbung unterscheiden lässt. Nach oben hin sind der Anzahl der Färbungen von Zellkernen und von Zellobjekten keine Grenzen gesetzt, solange bis physikalisch eine klare Trennung der unterschiedlichen Färbungen nicht mehr möglich ist.

Prinzipiell ist es auch möglich, Zellkerne als Zielstruktur zu färben. In diesem Fall liegen somit Zellkerne vor, die zumindest einmal identifikationsgefärbt und zumindest einmal zielstrukturgefärbt sind. Da die aufgenommenen Bilder getrennt nach den Färbungen ausgewertet werden, können auch aus den beiden für die Zellkerne vorgenommenen Färbungen entsprechende Schlüsse gezogen werden.

Die SU 652 580 A betrifft die Erkennung von Strukturen in Mikroschnitten. Diese Druckschrift hat nichts mit der automatisierten Erkennung von Einzelzellen im Gewebsverband, der Analyse von Koreaktivitäten, deren statistischer Auswertung und der interaktiven graphischen Auswahl und Verknüpfung von Parametern zu tun. Insbesondere gab es im Jahr 1979 noch keine graphischen Benutzeroberflächen bei Computern.

In der JP 6138119 A wird eine Anordnung zum automatischen Zählen und zur Analyse von Zellen beschrieben. Es handelt sich dabei um ein Verfahren zur Erkennung und Vermessung von isolierten Zellen. Derartige Systeme betreffen die Analysen an Einzelzellen auf Objektträgern. Dabei muss man den Begriff "Einzelzelle" wörtlich nehmen: Die Zellen liegen einzeln (isoliert) auf Objektträgern und sind im Gegensatz zur Erfindung (räumlich) deutlich voneinander abgegrenzt (getrennt). Darüber hinaus handelt es sich bei den zu analysierenden Zellen üblicherweise um Zellen gleichen Typs (bei JP 6138119 A um Myelozyten und (peripheral blood cells) Blutzellen, Zellen mit jeweils einheitlicher Morphologie).

Erfindungsgemäß werden verbundene Zellen in Geweben analysiert, Zellen von beliebigem Typ und von beliebiger - auch innerhalb eines Zelltyps VARIABLER - Morphologie werden erkannt und vermessen. Systeme die isolierte Einzelzellen analysieren können, scheitern am Gewebsverband. Algorithmen die isolierte Einzelzellen erkennen können, versagen, wenn diese Einzelzellen eng aneinander gepresst liegen (wie nun einmal in einem Gewebe üblich).

WO 99/04244 A1 betrifft einen Prozess zur Untersuchung von zytologischen Proben, wobei atypische Zellen aufgrund verschiedener Parameter, die innerhalb od. außerhalb von festgelegten Wertebereichen liegen, erkannt werden. Bei diesem Verfahren werden zelluläre Objekte, vor allem aber Zellkerne dargestellt, verschiedene Parameter vermessen und hinsichtlich ihrer Zugehörigkeit zu bestimmten Wertebereichen analysiert.

Das Verfahren nach WO 99/04244 A1 sieht vor, dass unter Einbeziehung einer Fülle von Daten (Patientengeschichte, Anamnese, Voruntersuchungen und - nur ein Faktor - bildanalytische Bearbeitung aktueller Proben) eine Wahrscheinlichkeitsberechnung durchgeführt wird, die dem Pathologen darüber Auskunft gibt, ob ein vaginaler Abstrich "wahrscheinlich entartete Zellen enthält", "verdächtig" oder wahrscheinlich "innerhalb normaler Grenzwerte" ist. Das erfindungsgemäße Analyseverfahren trifft keine derartigen Aussagen, sondern stellt zusammenfassend gesehen ein Messinstrument dar, mit dem Grundlagenforscher wie Pathologen detaillierte Aussagen über die Zustände einzelner Zellen im Gewebsverband treffen können. Insbesondere durch Vergleich von normalen und entarteten Geweben sowie in Bezug setzten der Messwerte mit Positiv- und Negativkontrollen können sehr genaue Zustandsbestimmungen vorgenommen werden.

Mit dem in der WO 99/04244 A1 beschriebenen Verfahren werden vor allem vaginale Abstriche (s.g. *PAP-smears*) untersucht, eine Probenform also, bei der die zu vermessenden Zellen wiederum nicht in Gewebeform sondern mehr oder weniger isoliert vorliegen (vergleiche Ausführung bezüglich JP 6138119). Zwar wird in der WO 99/04244 A1 eingangs angeführt, dass jenes Verfahren auch für die Untersuchung von Gewebeproben geeignet sei, im weiteren Verlauf der Patentbeschreibung wird darauf jedoch kein Bezug mehr genommen. Dies ist nur insoweit plausibel, als von einer zellunabhängigen bzw. statistischen Erfassung von zellulären Parametern im Gewebsverband die Rede ist. Sehr wohl Bezug genommen wird aber auf die insbesondere bei einer Einfarbentechnik nicht nur in Geweben sondern selbst bei Abstrichen auftretende Problematik der optischen Trennung von Einzelzellen. Wenn also mit jenem Verfahren überhaupt etwas im Gewebe vermessen wird, dann bestenfalls isolierte (statistisch oder spezifisch verteilte) Strukturen, aber es werden keine individuellen Zellen in ihrer Ganzheit identifiziert. Es wird des Weiteren zwar ausgeführt, dass irgendwelche Strukturen in irgendwelchen Bildern analysiert werden; die Identifikation von Einzelzellen im Gewebsverband ist davon elementar verschieden, sowohl was die praktische Bedeutung als auch - und insbesondere - die erforderliche Methodik und die Verfahrensschritte betrifft. Es werden lediglich Einfachfärbungen analysiert, jedoch keine Mehrfarbenkombinationen. Das bedeutet, es kann nur eine zelluläre Struktur untersucht werden, wobei diese Struktur zwar die Zelle repräsentiert, aber eben nicht die Zelle ist. Wird ein Zellkern identifiziert, so ist damit die einzelne Zelle zu der dieser Zellkern gehört nur in erster Näherung identifiziert. Die genaue Lage des Zellleibes, der für zytologische Vermessungen und Erfassung diagnostisch relevanter Parameter unerlässlich ist, bleibt bei jener Betrachtung/bei jenem Analyseverfahren völlig unberücksichtigt. Eine adäquate zytopathologische Analyse setzt eine Differenzierung in Zellmembran, Zytoplasma und Zellkern voraus. Eine derartige Differenzierung in einzelne Zellkompartimente auf der Basis von identifizierten einzelnen Zellen erfordert zwingend den Einsatz einer Mehrfarbentechnik zur Darstellung der einzeln zu analysierenden Komponenten. Dieser Grundanforderung moderner Einzelzelldiagnostik - geforderte Differenzierung in Zellmembran, Zytoplasma und Zellkern - kann die auf einer Einfarbentechnik basierende WO 99/04244 A1 also gar nicht gerecht werden. Diese Grundeigenschaft des erfindungsgemäßen Analyseverfahrens - Differenzierung in Zellmembran, Zytoplasma und Zellkern - unterscheidet die vorliegende Patentanmeldung sehr wesentlich von der WO 99/04244 A1. Es wird in dieser Schrift ausdrücklich darauf hingewiesen, dass jenes Verfahren nicht auf die Analyse von Zellkernen beschränkt ist, sondern auf beliebige zelluläre Parameter angewendet werden kann. Dies wird zwar nirgends in der besagten Patentschrift dargestellt, ändert jedoch auch nichts daran, dass mit einer Einfarbentechnik die zytopathologisch essentielle Differenzierung in Zellmembran, Zytoplasma und Zellkern nicht realisierbar ist.

WO 99/08091 A1 zeigt ein automatisiertes Analysesystem zur Identifizierung von malignen Zellen. Um Daten über die Bösartigkeit von Zellen zu erlangen, werden insbesondere Informationen aus dem Zellkern verarbeitet. Weiters können mit geeigneten Algorithmen die Zellränder und die Flächen der Zellen berechnet werden. Ähnlich wie bei der WO 99/04244 A1 handelt es sich bei der WO 99/08091 A1 um ein Verfahren zur zytometrischen Analyse von Zellkernen (nicht Zellen im morphologischen Sinne) von nicht im Gewebsverband befindlichen Zellen. Zwar ist es ein gutes Verfahren zur Vermessung von Zellkernen, aber nicht mehr. Hingegen ist das erfindungsgemäße Verfahren nicht auf eine Färbemethode (Zellkernfärbung) beschränkt, sondern auf beliebige fluoreszenztechnische Methoden und Farbstoffkombinationen anwendbar. Es werden allerdings nur die Ränder und Flächen der Zellkerne erkannt bzw. berechnet und eben gerade nicht jene der ganzen Zellen. Dies ist aber genau die Schwierigkeit, die erfindungsgemäß gelöst wird, nämlich, dass die Erkennung von ganzen Zellen (Zellkern, Membran, Zellplasma), noch dazu von Zellen im geschlossenen Gewebsverband, ermöglicht wird. Genau diese Funktionalität aber, ist in der WO 99/08091 A1 nicht einmal ansatzweise erkennbar.

Als Färbungen bzw. färbbare Zellobjekte kommen insbesondere Färbungen bzw. Zellobjekte in Frage, wie sie im Anspruch 4 angeführt sind.

Erfindungsgemäß wird für eine erste Identifikation der zu untersuchenden Zellen zumindest ein Parameter der kenntlich gemachten Zellkerne auf einen bestimmten Wertebereich eingeschränkt. Dieser Wertebereich soll mit größtmöglicher Wahrscheinlichkeit einen Wertebereich darstellen, mit dem die gefärbten Zellkerne tatsächlich erfasst werden können. Objekte, die z.B. kleiner sind und in den für den Parameter "Größe" vorgegebenen Wertebereich nicht hineinpassen, sollen ausgeschieden werden, da es sich bei derartigen Objekten nicht um Zellkerne handelt. Auch zu große Objekte werden ausgeschieden. Die Anzahl der Parameter, die zur Aussiebung von als Zellkerne zu betrachtenden Objekten angewendet werden, ist nicht beschränkt. Zur Aussiebung der Zellkerne bzw. Bestimmung der Parameterbereiche können auch die Abhängigkeiten einzelner Parameter voneinander bzw. Gegenüberstellungen von Parametern in Form von Scattergrammen oder Histogrammen verwendet werden.

Die Beschränkung der Werte der einzelnen Parameter kann auch in Abhängigkeit von den Parametern der rekonstruierten Einzelzellen erfolgen; insbesondere können dadurch die Parameterbereiche in Abhängigkeit von den erzielten Untersuchungsresultaten festgelegt und verfeinert werden. Vorteilhafterweise wird dabei vorgegangen, wie in den Ansprüchen 3, 5 und/oder 7 angegeben wird.

Die Auswirkungen der einschränkenden Maßnahmen, die vorzugsweise mittels Eingrenzungen der gewünschten Populationen in Scattergrammen vorgenommen werden, führen in Form eines Rückkopplungsprozesses zu einer verbesserten, den Zellkerneigenschaften angepassten Objektidentifikationstrategie und können mit einer farblichen Veränderung der eingegrenzten Population im Originalbild verbunden werden, um die Konsequenzen dieser Operationen kontrollieren zu können.

Ist der Identifikationsprozess des untersuchten Teilbereiches des Gewebepräparates abgeschlossen, so werden mit den ermittelten Parametern alle weiteren Bilder des Gewebepräparates oder weiterer Gewebepräparate desselben oder eines gleichen Organes automatisch ausgewertet.

Für die Auswertung ist eine Identifikation des Zellleibes (Zytoplasma) und des Zellrandes (Zellmembran) erforderlich. Dazu ist zumindest eine Zielstrukturfärbung erforderlich, die das Zytoplasma und/oder die Zellmembran färbt. Die für diese Färbung charakteristischen Eigenschaften können mittels eines softwaremäßig zur Verfügung gestellten Messwerkzeugs automatisch ermittelt werden, wobei der Anwender durch Markierung einer gefärbten Zelle, die er aus der repräsentativen Szene aus dem dargestellten Bild auswählt, das Areal vorgibt, in dem die Messung dieses Parameters erfolgen soll. Das Messwerkzeug kann automatisch z.B. die Färbeintensität, den Farbton, die Größe und/oder Form dieser Zelle ermitteln. Die Grenze bzw. der Unterschied zu ungefärbten Zellen kann ermittelt werden, indem eine ungefärbte Zelle mit dem Messwerkzeug markiert und vermessen wird. Diese Operation kann für jeden zur Verfügung stehenden Farbkanal durchgeführt werden. Damit kann die Flächenerstreckung einer Zelle in einfacher Weise festgelegt werden. Im Zuge einer Korrelierung des(r) identifikationsgefärbten Bildes(r) und des(r) zielstrukturgefärbten Bildes(r) werden alle Objekte mit vergleichbaren Eigenschaften betrachtet.

Vorteilhafterweise wird gemäß den Merkmalen des Anspruches 8 vorgegangen, wobei bei einer zytoplasmatischen Zielstruktur-Färbung, ausgehend von den bereits identifizierten Zellkernen ein Wachstumsprozess eingeleitet und solange fortgesetzt wird, bis entweder ein Bildpunkt erreicht wird, der nicht dem ausgewählten Farbton entspricht, oder die Toleranzgrenze für die Größe und Form (Durchmesser) überschritten wird bzw. ein dem benachbarten Zellkern zugehöriges Objekt erreicht wird. Der Wachstumsprozess wird vorteilhafterweise bei Erreichen eines ungültigen Bildpunktes nicht abgebrochen, sondern nur der ungültige Bildpunkt nicht in das wachsende Binärobjekt einbezogen. Im Falle einer Membranfärbung wird das Größenwachstum ausgehend von den Zellkernen solange fortgesetzt bis ein dem Farbton entsprechendes Areal erreicht wird, wobei dieser Prozess solange innerhalb des gefärbten Areals fortgesetzt wird, bis das Intensitätsmaximum oder ein benachbartes Objekt bzw. die Toleranzgrenze für die Größe erreicht wird.

Im Falle von Mehrfachfärbungen, die membranöse und/oder zytoplasmatische Anteile der Zellen umfassen, können beide Wachstumsprozesse gleichzeitig durchgeführt werden; auch mehrere Farbtöne können nebeneinander zur Zellrekonstruktion herangezogen werden.

Die mit dieser Methode im dargestellten bzw. aufgenommenen Bild identifizierten Zellen werden bezüglich ihrer Parameter, vorzugsweise Färbeintensität, Größe, Form analysiert und die Resultate, bezogen auf alle Zellkerne dieses Bildes, in Form von Scattergrammen dargestellt bzw. ausgegeben. Vorteilhafterweise wird die Größe gegen die Färbeintensität aufgetragen bzw. dargestellt, und zwar für jeden Farbkanal separat. Bei Mehrfachfärbungen werden zweckmäßigerweise die Objekte nach den unterschiedlichen Farbkanälen geordnet nach der jeweiligen Färbeintensität, gegenübergestellt. Zusätzlich können die identifizierten Objekte bzw. Zellen im Originalbild farblich hervorgehoben werden. Die durch die Scattergramme dargestellten Verhältnisse und Abhängigkeiten verändern sich, wenn die Paramterbereiche verändert bzw. neu definiert werden.

Die Bilder aller Teilbereiche des Gewebepräparates werden in der obigen Weise analysiert und die Resultate bzw. ermittelten Parameter der Einzelzellen in Form von Scattergrammen ausgegeben, die vorzugsweise Färbeintensitäten einander gegenüberstellen. Die Auswertung für die Zellobjekte Zellkern, Zytoplasma und Zellmembran kann einzeln, aber auch beliebig kombiniert, durchgeführt werden. Die abschließende Auswertung erfolgt vorteilhafterweise mit Hilfe von Intensitätsscattergrammen, wobei graphisch einzelne Populationen unterschieden und separat ausgewertet werden können. Die Auswertung erfolgt vor allem hinsichtlich der Anzahl der analysierten Objekte, der prozentuellen Verteilung der jeweiligen Objekte in den unterschiedlichen Farbkanälen, der Färbeintensität, der Größe und der Form, wobei Populationseinschränkungen am Scattergramm vorgenommen werden können.

Mit der Erfindung wird es möglich, individuelle Zellen, selbst in geschlossenen Zellverbänden, automatisiert mit hoher Genauigkeit zu erkennen.

Die Erfindung wird im folgenden anhand der Zeichnungen beispielsweise näher erläutert.

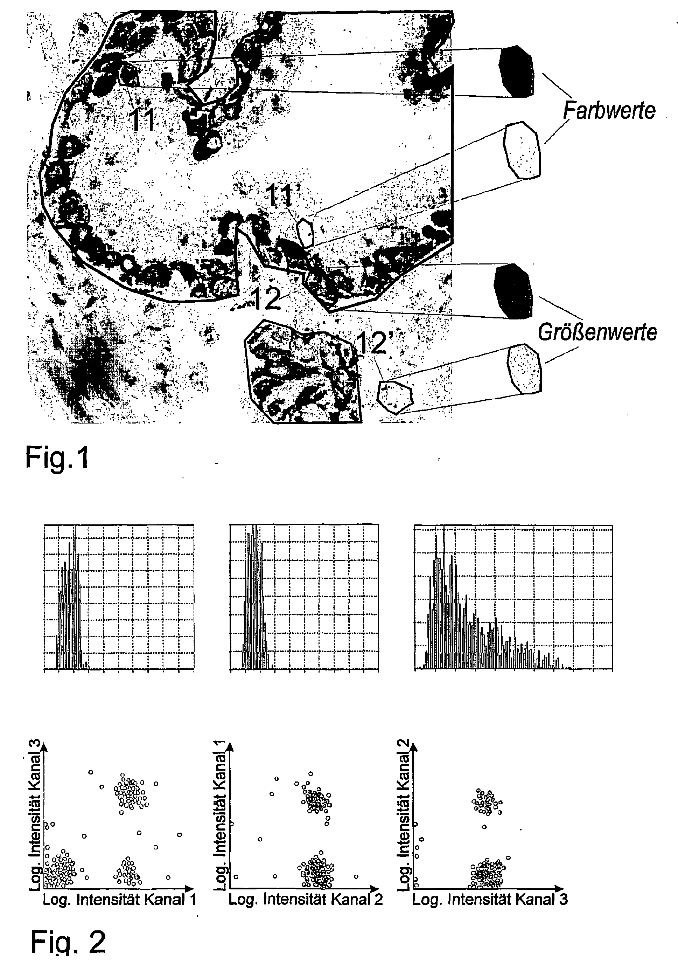

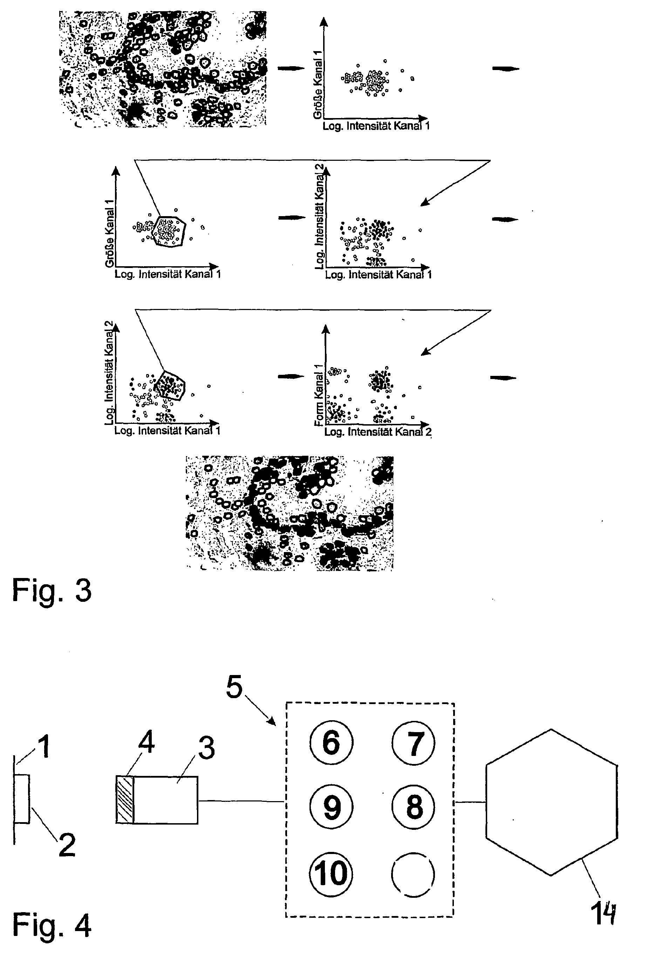

Fig. 1 zeigt die Vorgabe von Parametern von Zellen bzw. die Festlegung der zulässigen Parameterbereiche mittels intuitiver softwaremäßiger Markierungswerkzeuge. Fig. 2 zeigt Beispiele für Scattergramme und Histogramme. Fig. 3 zeigt ein Beispiel für die Datenauswertung und Fig. 4 zeigt ein Beispiel einer erfindungsgemäßen Anordnung.

In Fig. 1 ist als Beispiel ein Gewebeschnitt einer Niere dargestellt. Gefärbt wurden die Zellkerne (Identifikationsfärbung), z.B. blau und das Zytoplasma (Zielstrukturfärbung). Nach der Färbung von Gewebepräparaten werden Teilbereiche definiert und z.B. mit Hilfe eines Eppendorf-Mikromanipulators abgefahren. Mit einem Laserscanning-Mikroskop werden, z.B. zwei Scans in der Z-Ebene, ein grober und ein feiner, entlang einer horizontalen Linie in der Mitte des Bildes, durchgeführt, wobei der Fokus auf den Bereich größter Helligkeit eingestellt werden kann. Die Scanzeit beträgt z.B. vier Sekunden pro Gesichtsfeld, wobei jeder Teilbereich nur einmal mit einem 488 nm Argon-Laser eingescannt wird. Es ist möglich, mehrere, aufeinanderfolgende Scans vorzunehmen. Zur Erzielung unterschiedlicher Färbungen könnte z.B. ein erster Scan mit 543 nm He/Ne-Laser, um die Fluorochrome Cyanin 5 (Cy5) oder Cy3 messen zu können, gefolgt von einem Scan mit einem 488 nm Argon-Laser, um die Fluorochrome Cy2, Fluoreszin-Isothiozyanat (FITC) oder Peridinin-Chlorophyllprotein (PerCP) erfassen zu können, vorgenommen werden. Die Einstellung der Sensitivität der Detektoren muss einmal in Abstimmung mit den Negativ- und Positivkontrollen bzw. Einstellung der Parameterbereiche erfolgen. Das systematische Speichern der Bilddaten jedes einzelnen Scans, bestehend aus bis zu acht Farbkanälen, wird automatisch ausgeführt.

Zum Einstellen des Messsystems stehen Softwarewerkzeuge zur intuitiven Markierung der Gültigkeitsbereiche der einzelnen Messparameter und allenfalls auch auf bestimmte Bildbereiche zur Verfügung (Fig. 1). Diese Messparameter umfassen z.B. Größe, Umfang, Form, Färbeintensität und Färbemuster der dargestellten Objekte. Dabei können diese Grenzwerte numerisch oder graphisch definiert werden; vorzuziehen ist eine intuitive Definition, d.h. der Benutzer gibt dem System nach Betrachtung des dargestellten Bildes ein oder mehrere repräsentative Messobjekte vor, also einzelne Zellen oder zelluläre Kompartimente, die im dargestellten Bild erkennbar sind und das System extrahiert daraus selbständig die numerischen Daten für die Gültigkeitsintervalle jedes gewünschten Parameters. Damit ist das System in der Lage all jene Strukturen in den Bildern selbständig zu erkennen, die innerhalb vorgegebener Toleranzgrenzen den als repräsentativ definierten Objekten entsprechen.

Durch Kennzeichnung von zwei Zellkernen wird, wie in Fig. 1 oben dargestellt, der Parameter Färbeintensität bezüglich seines Minimalwertes und seines Maximalwertes vorgegeben. Diese beiden Werte stellen die Bereichsgrenzen für diesen Parameter dar und im weiteren Auswertevorgang werden nur Objekte als Zellkern erkannt bzw. zugelassen, deren Färbeintensität innerhalb dieses Bereiches liegen.

Für die Definition des Parameterbereiches der Zellgröße wird eine Färbung herangezogen, die charakteristisch für die gesamte Zelle ist, also vorteilhafterweise eine Membranfärbung oder Zytoplasmafärbung. Die dabei ermittelten Parameter geben den Parameterbereich für die Zellgröße vor (Fig. 1 rechts unten).

Die Bilder, in denen die Zellkerne bezüglich ihrer Färbeintensität mit entsprechenden Parameterbereichen definiert wurden, und die Bilder, in denen die Zellgröße mit entsprechenden Parameterbereichen, definiert wurde, werden korreliert, wobei die Zellkerne und die durch die Größe definierten Zellen, insbesondere lagemäßig, einander zugeordnet werden. Eine derartige Zuordnung kann auch derart erfolgen, dass einer Mehrzahl von unterschiedlichen Zellkernfärbungen jeweils einer aus einer Mehrzahl von unterschiedlichen Zellfärbungen zugeordnet wird und umgekehrt, da durch Korrelation einer Mehrzahl von unterschiedlichen Färbungen und entsprechenden Auswertevorgängen die Definition von Zellkernen und Zellgröße bzw. Zellen exakter vorgenommen werden kann, wodurch die Auswertegenauigkeit erhöht wird.

Es ist möglich, in dem dargestellten Bild eines Teilbereiches eines Gewebepräparates die Zellkerne und/oder die Zellobjekte zu kennzeichnen, die den gewählten oder vorgegebenen Parameterbereichen entsprechen. Für diese gekennzeichneten Objekte können auch weitere Parameter bestimmt werden, indem diese Objekte vermessen werden. Die Gegenüberstellung von ermittelten Parametern in Scattergrammen oder Histogrammen (Fig. 2) bringt bereits erste Aussagen über die vorhandene Zellpopulation bzw. kann dazu herangezogen werden, die zuvor verwendeten Parameterbereiche zur Erhöhung der Auswertegenauigkeit neu bzw. exakter festzulegen.

Zur Zellrekonstruktion bzw. zur Ermittlung der Einzelzellen wird, ausgehend von den identifizierten Zellkernen, mit einem vorgegebenen oder an das jeweilige zu untersuchende Gewebepräparat angepassten bzw. wählbaren Rechenalgorithmus ein Zellwachstum eingeleitet. Dabei wird, vorzugsweise unter Berücksichtigung von Maximal- und Minimalwerten von Zellparametern, insbesondere für Zellgröße bzw. Zelldurchmesser, um die Zellkerne herum jeweils eine Zellfläche aufgebaut, und zwar unter Beachtung des Kriteriums, dass benachbarte, ebenfalls wachsende Zellflächen miteinander nicht verschmelzen und eine Berührung der Zellflächen bzw. Zellwände bzw. Zellmembran ausgeschlossen wird. Die erhaltene Begrenzung der ermittelten bzw. gewachsenen Objekte wird als Begrenzung der dadurch rekonstruierten Einzelzellen angesehen.

Die Anzahl, die Fläche und/oder Färbeintensität bezüglich zumindest einer der vorgenommenen Färbungen und/oder andere Parameter der rekonstruierten Einzelzellen können festgestellt werden und/oder die Einzelzellen gegebenenfalls in Abhängigkeit von ihrer Färbeintensität und/oder anderer ausgewählter Parameter in Populationen eingeteilt und allenfalls dargestellt und weiter untersucht bzw. analysiert werden. Die aus dem jeweiligen Bildmaterial extrahierten Merkmale, verfügbar in Form von numerischen Daten, können in Form von Histogrammen und Scattergrammen aufbereitet und dargestellt werden (Fig. 2).

In Fig. 2 sind Histogramme (Häufigkeit von Färbeintensitäten in einzelnen Farbkanälen) und Scattergramme (für einfach, doppelt und dreifach reaktive Zellen) für die Färbeintensitäten in unterschiedlichen Farbkanälen dargestellt. Man erkennt die Lokalisierung bzw. Gruppierung von einzelnen Zellen zugeordneten Messwerten, die Aussagen über die Zellen zulassen. Dabei eignen sich Scattergramme besonders zur weiteren Bearbeitung der Messwerte und einer vertiefenden Evaluation der numerischen Daten. In solchen Scattergrammen können verschiedene Objekteigenschaften (Objektform, Oberflächenbeschaffenheit, mittlere densitometrische Intensität, Intensitätsschwankungen, etc) gegeneinander aufgetragen und ihr Verhältnis zueinander dargestellt werden. Anhand solcher Scattergramme können *Gates* (Gültigkeitsintervalle für je *zwei* Messparameter) gesetzt werden, und diese miteinander verknüpft werden (Fig. 3).

Fig. 3 zeigt das Resultat der Indentifikation des in Fig. 1 dargestellten Gewebepräparates und eine vorteilhafte Vorgangsweise bei der Verwertung der erhaltenen Parameter bzw. Bildinhalte. Aus einer repräsentativen korrespondierenden Szene von kenntlich gemachten Zellobjekten wird ein Scattergramm abgeleitet, bei dem die Größe der Objekte der Färbeintensität gegenübergestellt wird (erste Reihe von Fig. 3). Durch Definition von Gates, entweder interaktiv oder automatisch durch Schwerpunktbestimmung von Messpunktgruppen können spezifische Populationen innerhalb der gesamten Messwerte identifiziert werden, wie beispielsweise in der zweiten Reihe dargestellt ist, wenn entsprechende Parameter von unterschiedlichen Farbkanälen einander gegenübergestellt werden.

Gates, die in einer Parameterkombination definiert wurden, können auch in anderen Parameterkombinationen visualisiert werden, wodurch immer genauer definierte Subpopulationen identifiziert werden können, wie dies beispielsweise aus der dritten Reihe hervorgeht.

Gemäß der untersten Darstellung in Fig. 3 können die auf dem Bildschirm 14 (Fig. 4) dargestellten Zellobjekte in unterschiedlicher Kenntlichmachung dargestellt werden, d.h. nach ungegateten Messwerten, nach Messwerten im Gate 1 bzw. nach Messwerten in Gate 1 und Gate 2 bzw. nach Messwerten in Gate 1 aber nicht in Gate 2 kenntlich gemacht. Diese Kennzeichnung, insbesondere durch Färbung, kann automatisch vom Rechner vorgenommen werden; Voraussetzung dafür ist die Darstellung der im Zuge des Korrelierungsvorganges erhaltenen Parameter in Form von Histogrammen und Scattergrammen und eine überlegte Auswahl der gewählten Parameter.

Mit dieser Auswertemöglichkeit können sehr genaue Identifikationen von Einzelzellen eines bestimmten Zelltyps erreicht werden. Die in einem *Gate* beinhalteten Zellen können in anderen Scattergrammen, wo andere Messparameter gegeneinander aufgetragen sind, farblich hervorgehoben und analytisch separat behandelt werden, so dass man die Eigenschaften von Zellen, die einmal in *einem* Gate (also durch zwei Messparameter) zu einer Population zusammengefasst wurden, spezifisch in Hinblick auf andere Objekteigenschaften untersuchen kann, ohne wiederum die Gesamtheit der vermessenen Zellen für die Auswertung heranziehen zu müssen. Die eigentliche Evaluation der Messwerte findet also nicht durch Einschränkungen bei der Bildanalyse, sondern an Hand bestimmter Objekteigenschaften innerhalb der Gesamtheit der vermessenen Objekte statt. Die bei dieser Auswertung ermittelten Parameter können verwendet werden, um die Festlegung der Wertebereiche der Parameter zu verbessern.

In Fig. 4 ist ein Ausführungsbeispiel einer erfindungsgemäßen Anordnung schematisch dargestellt. Die Anordnung umfasst einen Träger 1 für Gewebepräparate 2. Die entsprechend gefärbten Gewebepräparate 2 werden mit einer elektronischen Bildaufnahmeeinrichtung 3 durch eine Anzahl von Farbkanälen 4 aufgenommen. Die Bilder in der entsprechenden Färbung werden dem Rechner 5 in digitaler Form zugeführt und unter Verwendung eines Prozessors 6 ausgewertet. Der Rechner umfasst eine Parametereingrenzungseinheit 7, die vorteilhafterweise als Softwaretool ausgeführt ist und mit der Wertebereiche für die Zellparameter vorgegeben werden können. Es kann dabei vorgegangen werden, wie in Fig. 1 dargestellt ist, dass eine bestimmte Kerngröße und Färbung als Parameterwert für Zellkerne 11 und 11' vorgegeben wird und z.B. ein stark 11 und ein schwach 11' gefärbter Zellkern markiert werden. Damit erfolgt eine Eingrenzung des Parameters Färbeintensität der Zellkerne in dem dargestellten Bild auf einen minimalen und auf einen maximalen Wert. Auch andere Parameter können eingegrenzt werden.

In derselben Weise kann z.B. auch die Zellgröße auf einen Parameterbereich eingegrenzt werden. In Fig. 1 rechts unten sind eine stärker gefärbte große Zelle 12 und eine geringer gefärbte kleinere Zelle 12' markiert und diese bilden somit die Bereichsgrenzen für die Parameter Zellgröße und Färbeintensität gemäß der gesamten Zellerstreckung bzw. Zellfläche. Prinzipiell ist es auch möglich, derartige Parameterwerte bzw. Bereich händisch bzw. nach Erfahrungswerten oder aufgrund von vorangehenden Auswertungen erhaltener Ergebnisse einzugeben und festzulegen. Diese Parameter werden sodann der Korrelation der identifikationsgefärbten und der strukturgefärbten Bilder zugrunde gelegt.

Der Rechner 5 umfasst des weiteren einen Speicher 8 für die gewählten Parameter bzw. für ermittelte Parameter und des weiteren einen Bildspeicher 9 für die verschieden gefärbten, aufgenommenen digitalen Bilder.

Eine Korrelierung der für die Zellkerne ermittelten Bildinhalte mit den für die zielstrukturgefärbten Zellobjekte ermittelten Bildinhalte erfolgt in einer Korrelierungseinheit 10. In der Korrelierungseinheit 10 erfolgt rechnerisch das Zellwachstum, insbesondere unter Beachtung der lagemäßigen Zuordnung von den ermittelten Zellkernen und den, ausgehend von diesen Zellkernen, wachsenden Zellflächen. Die Darstellung der Bilder der gefärbten Gewebepräparate und/oder rekonstruierten Zellen und/oder der Histogramme und Scattergramme erfolgt auf einem Monitor 14.

Die erfindungsgemäßen Verfahrensschritte werden mittels entsprechenden Recheneinheiten bzw. Hardware-Bauteilen und -Programmen der erfindungsgemäßen Anordnung vorgenommen.

## Patentansprüche

1. Verfahren zur Untersuchung, insbesondere Identifikation, von vorzugsweise in dichten bzw. geschlossenen Zellverbänden vorliegenden Zellen, insbesondere von Einzelzellen in Geweben,
- wobei ein flächiges Gewebepräparat, insbesondere Gefrier- oder Paraffinschnitt, Zellschmier, Zytospin, od.dgl., einer oder einer Anzahl von unterschiedlichen, insbesondere vollständigen, vorzugsweise flächigen Identifikationsfärbung(en) der Zellkerne, insbesondere aller Zellkerne, unterzogen wird,
- wobei zumindest eine gegenüber der(n) Identifikationsfärbung(en) unterschiedliche Zielstrukturfärbung von Zellobjekten, insbesondere Zytoplasma und/oder Zellmembran und/oder Zellkernen und/oder weiteren zytologischen Parametern, des Gewebepräparates vorgenommen wird, wobei
- von dem gefärbten Gewebepräparat mittels einer elektronischen Bildaufnahmeeinrichtung, z.B. Laserscanningmikroskop, CCD-Kamera, Video- oder Digitalkamera, Fotoscanner od.dgl., digitale Bilder, insbesondere Farb- oder Grauwertbilder, aufgenommen werden und wobei
- zumindest ein Bild eines Teilbereiches des Gewebe präparates in zumindest einer Färbung und/oder in einer wählbaren Kombination seiner Färbungen dargestellt wird,
**dadurch gekennzeichnet,**
- **dass** zumindest ein Parameter, z.B. Farbton, Fläche, Form, Umfang, Färbeintensität, Farbmuster od.dgl., der im Bild dieses Teilbereiches durch Identifikationsfärbung kenntlich gemachten Zellkerne und zumindest ein Parameter, z.B. Farbton, Fläche, Form, Umfang, Farbintensität, Farbmuster od.dgl., der im Bild eines Teilbereiches durch Zielstrukturfärbung kenntlich gemachten Zellobjekte auf einen vorgegebenen bzw. wählbaren Wertbereich eingeschränkt wird,
- **dass** unter Anwendung von Bildverarbeitungsalgorithmen im Bild dieses Teilbereiches Zellkerne und Zellobjekte, deren Parameter dem jeweiligen Parameterbereich(en) entsprechen ermittelt und gegebenenfalls dargestellt, werden,
- **dass** gegebenenfalls die unter Anwendung von Bildverarbeitungsalgorithmen ermittelten Parameter der Zellkerne und Zellobjekte im Bild des Teilbereiches in Form von Histogrammen und Scattergrammen in gegenseitiger Abhängigkeit dargestellt und gegebenenfalls - abhängig von diesen Messergebnissen - neue Parameterbereiche vorgegeben werden,
- **dass** zur Ermittlung der vorhandenen Einzelzellen der für die Zellkerne ermittelte Bildinhalt zumindest eines, vorzugsweise aller, Bildes(r), mit dem für die zielstrukturgefärbten Zellobjekte ermittelten Bildinhalt zumindest eines, vorzugsweise aller, Bildes(r) korreliert wird, indem, - gegebenenfalls unter Berücksichtigung zumindest einer durch zumindest eine das Zytoplasma und/oder die Zellmembranen erfassende(n) Zielstrukturfärbung(en) ermittelten Flächenerstreckung der zielstrukturgefärbten Zellobjekte, - ausgehend von den identifizierten Zellkernen mit einem vorgegebenen Rechenalgorithmus ein Zellwachstum oder Zellvergrößerung zur Rekonstruktion von Einzelzellen eingeleitet wird, bei dem, vorzugsweise unter Berücksichtigung von Maximal- und Minimalwerten von Zellparametern, insbesondere für Zellgröße bzw. Zelldurchmesser, um die Zellkerne herum jeweils eine Zellfläche aufgebaut wird, und zwar unter Beachtung des Kriteriums, dass benachbarte Zellflächen miteinander nicht verschmelzen und eine Berührung der ermittelten Zellflächen bzw. deren Ränder ausgeschlossen wird, wobei gegebenenfalls die Begrenzung der ermittelten Zielobjekte als Begrenzung der rekonstruierten Einzelzellen angesehen wird, und
- **dass** die Anzahl, die Fläche und/oder Färbeintensität bezüglich zumindest einer der vorgenommenen Färbungen und/oder andere Parameter der rekonstruierten Einzelzellen festgestellt und/oder die Einzelzellen gegebenenfalls in Abhängigkeit von ihrer Färbeintensität und/oder anderer ausgewählter Parameter in Populationen eingeteilt und allenfalls weiter untersucht bzw. analysiert bzw. dargestellt werden.

2. Verfahren nach Anspruch 1, **dadurch gekennzeichnet, dass** Bilder der ermittelten Zellkerne und/oder der ermittelten Zellobjekte getrennt oder übereinandergelagert bzw. in demselben Bild dargestellt werden.

3. Verfahren nach Anspruch 1 oder 2, **dadurch gekennzeichnet, dass** ausgewählte Parameter, vorzugsweise Größe und/oder Form und/oder Färbeintensität, der identifizierten Zellkerne und/oder der identifizierten Zellobjekte und/oder der rekonstruierten Einzelzellen und/oder die Anzahl der identifizierten Zellkerne und/oder die Anzahl der identifizierten Zellobjekte und/oder der rekonstruierten Einzelzellen in Form von Histogrammen und/oder Scattergrammen in gegenseitiger Abhängigkeit einander gegenübergestellt dargestellt werden.

4. Verfahren nach einem der Ansprüche 1 bis 3, **dadurch gekennzeichnet, dass** als Identifikationsfärbung und/oder Zielstrukturfärbung DNA-Färbungen und/oder Antikörperfärbungen und/oder Antiserafärbungen und/oder Eindiffusionen von Farbstoffen und/oder chemische Farbreaktionen und/oder Gensondenfärbungen vorgenommen werden und/oder als Zellobjekte in der Zelle befindliche oder an deren Oberfläche anhängende Strukturen, Zellkern, Zytoplasma, Zellmembran, Tumormarker, Zytokine, Wachstumsstoffe, Ionen, spezifische Proteine, DNA-Abschnitte od.dgl. gefärbt werden.

5. Verfahren nach einem der Ansprüche 1 bis 4, **dadurch gekennzeichnet, dass** durch Ermittlung von Abhängigkeiten der Parameter von Zellkern und/oder Zellobjekten und/oder der rekonstruierten Zellen, vorzugsweise Größe und/oder Form und/oder Färbeintensität, untereinander und/oder von der Anzahl und/oder von der Verteilung der Zellkerne und/oder Zellobjekte und/oder durch Ermittlung der Verteilung- bzw. Populationsschwerpunkte der Zellkerne und/oder Zellobjekte, insbesondere durch Darstellung der für die rekonstruierten Einzelzellen ermittelten Parameterwerte in Scattergrammen und/oder Histogrammen, Vorgaben für die Einschränkung bzw. Auswahl der Wertebereiche für die Parameter für die Darstellung der identifikationsgefärbten Zellkerne und/oder der zielstrukturgefärbten Zellobjekte vor bzw. für die Durchführung des Zellwachstums ermittelt werden und/oder diese Abhängigkeiten, insbesondere die Färbeintensitäten in den einzelnen Farbkanälen, zur Beurteilung der Einzelzellen herangezogen werden.

6. Verfahren nach einem der Ansprüche 1 bis 5, **dadurch gekennzeichnet, dass** nach Korrelierung der Bilder desselben aufgenommenen Teilbereiches des Gewebepräparates und Rekonstruktion der Einzelzellen für diesen Teilbereich die ermittelten und eingesetzten Parameterwerte bzw. -bereiche für die Auswertung der Bilder des restlichen Bereiches dieses Gewebepräparates und/oder weiterer entsprechender Gewebepräparate herangezogen werden.

7. Verfahren nach einem der Ansprüche 1 bis 6, **dadurch gekennzeichnet, dass** die Vorgabe bzw. Einschränkung eines Parameterwertes bzw. -bereiches für ein strukturgefärbtes Zellobjekt, insbesondere für jede vorhandene Färbung, durch Markierung eines dargestellten Zellobjektes (Zellkern, Zytoplasma, Zellmembran) bzw. eines als Einzelzelle gewerteten Zellobjektes vor und/oder nach Durchführung der Zellrekonstruktion erfolgt, indem Färbeintensität, Farbton, Größe und/oder Form dieser Einzelzelle ermittelt werden und in Abhängigkeit der bewerteten Darstellung des Zellobjektes dieser festgestellte Parameter ein neuer Parameterwert bzw. -bereich vorgegeben bzw. gewählt wird.

8. Verfahren nach einem der Ansprüche 1 bis 7, **dadurch gekennzeichnet, dass**, ausgehend von den Zellkernen mit dem eingesetzten Rechenalgorithmus eine Zellrekonstruktion in Form eines Zellwachstums eingeleitet wird, bis die Zellfläche bzw. der Zellrand bzw. die Zellmembran einen Bildpunkt oder ein Objekt im Bild des Gewebepräparates erreicht, dessen Parameter einem Parameter eines nicht strukturgefärbten Zellobjektes oder weiteren Objektes im Gewebepräparat entspricht und/oder bis ein vorgebener Parameterwert überschritten wird und/oder bis ein einem benachbarten Zellkern zugeordneter Zellwachstumsbereich erreicht wird.

9. Verfahren nach einem der Ansprüche 1 bis 8, **dadurch gekennzeichnet, dass** die identifizierten Einzelzellen, insbesondere gemäß vorgegebenen Parametern bzw. Parameterbereichen in dem dargestellten digitalen Bild des Gewebepräparates, gegebenenfalls in für die einzelnen Färbungen getrennten Bildern, herausgehoben bzw. gekennzeichnet werden.

10. Verfahren nach einem der Ansprüche 1 bis 9, **dadurch gekennzeichnet,**
- **dass** vor der Darstellung der Zellkerne und der Zellobjekte und vor der Zellrekonstruktion eine Beschränkung bzw. Neubestimmung der Parameter, insbesondere der Färbeintensität und Größe, erfolgt, wobei zwischen einer derartigen Neubestimmung bzw. Beschränkung eine Darstellung und Bewertung der mit dem (den) jeweiligen vorangehenden Parameterwert(en) ermittelten korrelierten Bilder erfolgt, und/oder
- **dass** von den Parametern, insbesondere Fläche, Farbton und Färbeintensität der zielstrukturgefärbten Zellobjekte Parameter, insbesondere Zellgröße und Zellform, für die Zellrekonstruktion abgeleitet werden.

11. Verfahren nach einem der Ansprüche 1 bis 10, **dadurch gekennzeichnet,**
- **dass** zur Zellrekonstruktion bei einer zytoplasmatischen Färbung, ausgehend von den identifizierten Zellkernen ein Wachstumsprozess einsetzt, der solange fortgesetzt wird, bis entweder ein Bildpunkt erreicht wird, der nicht dem ausgewählten Farbton entspricht oder die Toleranzgrenze für die Größe überschritten wird bzw. ein dem benachbarten Zellkern zugehöriges Objekt erreicht wird,
- **dass** zur Zellrekonstruktion bei einer Zellmembranfärbung das von dem von der Membran umgebenen Zellkern aus in alle Richtungen erfolgende Zellwachstum dort bzw. in dem Bereich beendet wird, wo die Zellfläche bzw. deren Rand bzw. die Zellmembran auf ein(en) der Farbe der Membran entsprechenden(s) gefärbten(s) Abschnitt bzw. Zellobjekt oder auf ein anderes wachsendes Zellobjekt trifft, wobei gegebenenfalls ein Eindringen der wachsen gelassenen Zellfläche in den membrangefärbten Bereich um ein vorgegebenes Ausmaß zugelassen wird.

12. Anordnung zur Untersuchung, insbesondere Identifikation, von in dichten bzw. geschlossenen Zellverbänden vorliegenden Zellen, die in Form eines flächigen Gewebepräparates (2), insbesondere Gefrier- oder Paraffinschnitt, Zellschmier, Zytospin, od.dgl., vorliegen und einer oder einer Anzahl von unterschiedlichen, insbesondere vollständigen, vorzugsweise flächigen Identifikationsfärbung(en) der Zellkerne, insbesondere aller Zellkerne, und zumindest einer gegenüber der(n) Identifikationsfärbung(en) unterschiedlichen Zielstrukturfärbung von Zellobjekten, insbesondere Zytoplasma und/oder Zellmembran und/oder Zellkernen und/oder weiteren zytologischen Parametern, unterzogen wurden,
- wobei die Anordnung eine elektronische Bildaufnahmeeinrichtung (3), z.B. Laserscanningmikroskop, CCD-Kamera, Video- oder Digitalkamera, Fotoscanner od.dgl., zur Aufnahme digitaler Bilder, insbesondere Farb- oder Grauwertbilder des gefärbten Gewebepräparates (2) aufweist, an die zumindest eine Abbildungseinheit bzw. eine Recheneinheit (5) zur Darstellung von zumindest einem Bild zumindest eines Teilbereiches des Gewebepräparates in zumindest einer Färbung und/oder in zumindest einer wählbaren Kombination seiner Färbungen angeschlossen ist, insbesondere zur Durchführung des Verfahrens nach einem der Ansprüche 1 bis 11,
**dadurch gekennzeichnet,**
- **dass** die Recheneinheit (5) zur Darstellung und Bearbeitung sowie Vermessung der auf den Bildern dargestellten Zellobjekte eingerichtet ist und eine Parametereingrenzungseinheit (7) umfasst, mit der zumindest ein Parameter, z.B. Farbton, Fläche, Form, Umfang, Färbeintensität, Farbmuster od.dgl., der im Bild dieses Teilbereiches durch Identifikationsfärbung kenntlich gemachten Zellkerne (11, 11') und zumindest ein Parameter, z.B. Farbton, Fläche, Form, Umfang, Färbeintensität, Farbmuster od. dgl., der im Bild eines Teilbereiches durch Zielstrukturfärbung kenntlich gemachten Zellobjekte (12, 12') auf einen mit einer Eingabeeinheit vorgebbaren bzw. ausgewählten Wertbereich einschränkbar ist,
- **dass** von der Recheneinheit (5) unter Anwendung von Bildverarbeitungsalgorithmen im Bild dieses Teilbereiches Zellkerne (11, 11') und Zellobjekte (12, 12'), deren Parameter dem jeweiligen Parameterbereich(en) entsprechen, ermittelt und gegebenenfalls, insbesondere unterscheidbar kenntlich gemacht, dargestellt werden,
- **dass** die Anordnung zur Ermittlung der vorhandenen Einzelzellen eine Korrelierungseinheit (10) aufweist, mit der der für die Zellkerne ermittelte Bildinhalt zumindest eines, vorzugsweise aller, Bildes(r), mit dem für die zielstrukturgefärbten Zellobjekte ermittelten Bildinhalt zumindest eines, vorzugsweise aller, Bildes(r) korreliert wird, indem - gegebenenfalls unter Berücksichtigung zumindest einer durch zumindest eine das Zytoplasma und/oder die Zellmembranen erfassende Zielstrukturfärbung ermittelten Flächenerstreckung der zielstrukturgefärbten Zellobjekte - ausgehend von den identifizierten Zellkernen mit einem vorgegebenen Rechenalgorithmus ein Zellwachstum zur Rekonstruktion von Einzelzellen eingeleitet wird, bei dem, vorzugsweise unter Berücksichtigung von Maximal- und Minimalwerten von Zellparametern, insbesondere für Zellgröße bzw. Zelldurchmesser, um die Zellkerne herum jeweils eine Zellfläche aufgebaut wird, und zwar unter Beachtung des Kriteriums,
- **dass** benachbarte Zellflächen miteinander nicht verschmelzen und eine Berührung der rechnerisch ermittelten Zellwandflächen ausgeschlossen wird, wobei gegebenenfalls die Begrenzung der ermittelten Struktur als Begrenzung der rekonstruierten Einzelzellen angesehen wird, und
- **dass** die Anzahl, die Fläche und/oder Färbeintensität bezüglich zumindest einer der vorgenommenen Färbungen und/oder andere Parameter der rekonstruierten Einzelzellen mit der Recheneinheit (5) festgestellt und/oder die Einzelzellen gegebenenfalls in Abhängigkeit von ihrer Färbeintensität und/oder anderer ausgewählter Parameter dargestellt und/oder deren Daten abgespeichert werden.

13. Anordnung nach Anspruch 12, **dadurch gekennzeichnet, dass** die Bildaufnahmeeinrichtung (3) eine Mehrzahl von Farbkanälen (4) zur Aufnahme von Bildern des Gewebepräparates (2) in unterschiedlichen Färbungen aufweist.

14. Anordnung nach Anspruch 12 oder 13, **dadurch gekennzeichnet, dass** mit der Abbildungseinheit (5) ausgewählte Parameter, vorzugsweise Größe und/oder Form und/oder Färbeintensität, der identifizierten Zellkerne und/oder der identifizierten Zellobjekte und/oder der rekonstruierten Einzelzellen und/oder die Anzahl der identifizierten Zellkerne und/oder die Anzahl der identifizierten Zellobjekte und/oder der rekonstruierten Einzelzellen in Form von Histogrammen und/oder Scattergrammen in gegenseitiger Abhängigkeit einander gegenübergestellt darstellbar sind.

15. Anordnung nach einem der Ansprüche 12 bis 14, **dadurch gekennzeichnet, dass** die identifizierten Einzelzellen in dem dargestellten digitalen Bild des Gewebepräparates, gegebenenfalls in für die einzelnen Färbungen getrennten Bildern, mit der Abbildungseinheit (5) herausgehoben bzw. **gekennzeichnet** werden.

## Claims

1. A process for the examination, in particular the identification of cells in preferably dense, cohesive cell complexes and solid tissues,
- in which a plane tissue sample, especially frozen or paraffin sections, cell smears, cytospin preparations or similar are processed with one or a number of different, especially complete, preferably plane identity stain/s of the cell nucleus, predominantly all nuclei,
- in which at least one target structure stain of cell objects, especially of cytoplasm and/or cell membrane and/or cell nucleus and/or further cytological parameter/s of said tissue sample, which differ/s from the identity stain/s, is performed,
- in which digital images of said stained tissue specimens are recorded, especially as color or gray tone images, employing an electronic image recorder, for example a laser scanning microscope, a CCD-camera, a video or digital camera, a photo scanner and
- in which at least one image of a segment of the said tissue section is represented with at least one stain and/or a selected combination of said stains,
said process comprising, in combination:
- a restriction of at least one parameter (color tone, surface area, shape, circumference, staining intensity, staining pattern or similar) of said identity stained nuclei in the image of said segment, and at least one parameter (color tone, surface area, shape, circumference, staining intensity, color pattern or similar) of cell objects identified with said target structure stain in an image of said segment, to a selected value range;
- application of image processing algorithms to said image of said segment, thereby identifying and showing nuclei and cell objects corresponding to said parameter range/s;
- a presentation, if necessary, of measurement results of said parameters of said nuclei and cell objects in said image of said segment obtained with said image processing algorithms in form of histograms and scattergrams in dependency of each other, thereby permitting to set new parameter ranges depending on these measurement results;
- a correlation of image data of at least one, preferably all image/s for said cell nuclei with one, preferably all image data for said target structure stained cell objects, in order to determine existent single cells, wherein said correlation is established by employing a predetermined calculation algorithm, starting the cell growth procedure for the reconstruction of single cells from said identified cell nuclei, by, where appropriate, taking into consideration stained areas of stained cell objects identified by at least one target structure stain, with said target structure stain determining at least the cytoplasm and/or the cell membrane of said cell objects;
- said cell growth procedure for the reconstruction of single cells, constructing around said cell nuclei a cell area, thereby preferably taking into account maximal and minimal values of said cell parameters, especially of cell size or cell diameter;
- said cell growth procedure, paying attention to the criterion, that neighboring cell surfaces do not fuse with each other and that contact of determined cell surfaces is excluded, wherein limitations of said cell objects are used as boundaries for reconstructed single cells, and
- where the amount, the area and/or the staining intensity with respect to at least one stain and/or other parameters of the reconstructed single cells are determined and/or single cells are divided into populations with regard to their staining intensity and/or other selected parameters and are further examined, analyzed or shown.

2. A process as claimed in claim 1, further **characterized by** the fact that images of identified nuclei and/or cell objects can be shown separately or superimposed, i.e. in the same image.

3. A process as claimed in claim 1 or 2, further **characterized by** the fact that selected parameters, preferably size and/or shape and/or staining intensity of identified nuclei and/or identified cell objects and/or the reconstructed single cells and/or the number of identified nuclei and/or the number of identified cell objects and/or reconstructed single cells can be presented in reciprocate dependency in histograms and/or scattergrams.

4. A process as claimed in one of the claims 1 to 3, further **characterized by** the use of DNA-stains and/or antibody stains and/or antiserum stains and/or diffusion stains and/or chemical color reactions and/or genetic probe stains, which are employed as identity stains and/or target structure stains, staining cellular objects within the cell or attached to its surface, nuclei, cytoplasm, cell membrane, tumor marker, cytokines, growth factors, ions, specific proteins, DNA sequences or similar.

5. A process as claimed in one of the claims 1 to 4, further **characterized by** determination of interdependencies of said parameters of nuclei and/or cell objects and/or reconstructed cells, preferably size and/or shape and/or staining intensity, and/or the amount and/or distribution of said nuclei and/or cell objects, and/or
by the determination of distribution or population clusters of nuclei and/or cell objects, especially by presentation of said parameter values for reconstructed single cells in scattergrams and/or histograms;
said interdependencies being used for
determination of limitations or selection of value ranges for the parameters for the depiction of identity stained nuclei and/or target structure stained cell objects, and
for the realization of cell growth, with
said interdependencies, especially staining intensities in the respective color channels being employed in the assessment of single cells.

6. A process as claimed in one of the claims 1 to 5, wherein after correlation of images of identical tissue specimen segments and reconstruction of single cells for these segments, the predetermined employed parameter values, i.e. ranges can be used in the analysis of images of the remaining segments of the same tissue specimen and/or other tissue specimens.

7. A process as claimed in one of the claims 1 to 6, further **characterized by** specification and restriction of parameter values for target structure stained cell objects, especially for each existent stain, by marking of depicted cell objects (nuclei, cytoplasm, cell membrane) or any cell object defined as a single cell, before and/or after cell reconstruction,
wherein said specification is achieved by determination of staining intensity, color tone, size and/or shape of the single cell, and
said determination allowing to set new parameter values, i.e. ranges in dependency of said evaluated cell object.

8. A process as claimed in one of the claims 1 to 7, further **characterized by** a cell reconstruction induced in the form of cell growth starting from the nuclei using the calculation algorithm,
wherein said calculation algorithm continues until the cell membrane reaches a pixel or an object in the image of the tissue specimen,
where the parameter corresponds with the parameter of a cell object or further object that has not been target structure stained in the tissue specimen and/or until a predetermined parameter value is exceeded and/or until the cell growth region of a neighboring nucleus is reached.

9. A process as claimed in one of the claims 1 to 8, further **characterized by** accentuation or marking of identified single cells, especially in accordance with predetermined parameters and parameter ranges, in the depicted digital image of the tissue specimen, with said image, if necessary, being separated into single color channels corresponding to each stain.

10. A process as claimed in one of the claims 1 to 9, further **characterized by**
setting of limitations or new definition of parameters, especially of staining intensity and size, prior to picturing of nuclei and cell objects and prior to cell reconstruction, wherein a depiction and assessment of correlated images with the respective previously determined parameter/s is performed,
wherein said parameters for cell reconstruction, predominantly cell size and cell shape, being derived from other parameters of target structure stained cell objects, predominantly surface area, color tone, and staining intensity.

11. A process as claimed in one of the claims 1 to 10, further **characterized by** the fact that
in a cytoplasmatic stain, a growth process is induced starting from identified nuclei, wherein said growth process continues until either a pixel is reached that does not correspond to the selected color tone or the tolerance limit for size is exceeded or an object belonging to a neighboring nucleus is reached;
in a cell membrane stain, cell growth originating form the nucleus enclosed by the membrane and extending in all directions, terminates where the cell membrane encounters a region or a cell object correspondingly stained to the color of the membrane, or another growing cell object, wherein invasion of the reconstructed cell membrane into the membrane stained region is allowed to a certain degree.

12. A set-up for the examination, in particular the identification of cells in preferably dense, cohesive cell complexes and solid tissues in form of a plane tissue specimen (2), especially in form of frozen or paraffin sections, cell smears, cytospin preparations or similar, with one or a number of different, especially complete, preferably plane identity stain/s of the cell nucleus, predominantly all nuclei, and at least one target structure stain of cell objects, especially of cytoplasm and/or cell membrane and/or cell nucleus and/or further cytological parameter/s that differ/s from the identity stain/s,
- wherein said set-up contains an electronic image recorder (3) i.e. laser scanning microscope, CCD-camera, video- or digital camera, photo scanner or similar to record digital images of the stained tissue specimen (2), especially color or gray tone images, attached to which is at least one imaging unit or computer (5) for the production of at least one image of at least one segment of the tissue sample in at least one stain and/or in at least one selectable combination of stains, especially for the processes described in claims 1 to 11,
said set-up comprising, in combination:
- a computer (5) for imaging and processing as well as measurement of cell objects in said images, and
- a parameter restriction unit (7) with which at least one parameter for identity stained nuclei (11, 11'), for example color tone, surface area, shape, circumference, staining intensity, color pattern or similar and at least one parameter for target structure stained cell objects (12, 12'), for example color tone, surface area, shape, circumference, staining intensity, color pattern or similar can be restricted to a predetermined or selected value range over an input unit, with
- said computer (5) being able to identify and accentuate nuclei (11,11') and cell objects (12,12') whose parameters correspond with the respective parameter range/s;
- a correlation unit (10), in order to determine single cells, with which image data acquired for nuclei from at least one, preferably all image/s are correlated with image data acquired for target structure stained cell objects from at least one, preferably all image/s;
- said correlation unit (10), taking into consideration the surface area of target structure stained cell objects determined employing at least one cytoplasm and/or cell membrane target structure stain, and
after which cell growth for the reconstruction of single cells is induced by constructing a cell surface around cell nuclei using a predetermined calculation algorithm,
with said algorithm, predominantly taking into account maximal and minimal values of cell parameters, especially for cell size and circumference with special regard to the criterion that,
- neighboring cell surfaces do not fuse and contact of calculated cell surfaces is excluded where the boundary of the determined structure is seen as the boundary for the reconstructed single cell;
- wherein the number, surface area and/or staining intensity with regard to at least one stain and/or other parameters of the reconstructed single cell is determined by the computer (5) and/or the single cells are shown with relation to their staining intensity and/or other specified parameters, and/or the data is stored.

13. A set-up according to claim 12, further **characterized by** an image recorder (3) with multiple color channels (4) for the recording of images of the tissue specimen (2) in different stains.

14. A set-up according to claim 12 or 13, further **characterized by** the fact that parameters selected with the imaging unit (5), preferably size and/or shape and/or staining intensity, and/or identified nuclei and/or identified cell objects and/or reconstructed single cells and/or the number of identified nuclei and/or the number of identified cell objects and/or reconstructed single cells can be presented in mutual dependency of each other in the form of histograms and/or scattergrams.

15. A set-up according to one of the claims 12 to 14, further **characterized by** the ability of the imaging unit (5) to accentuate and mark identified single cells in digital images of the tissue specimen, when necessary in separate images for each stain.

## Revendications

1. Une procédure pour l'examination, en particulier l'identification, de cellules dans des assemblages cellulaires denses ou cohésifs, en particulier de cellules individuelles dans des tissus,
- dans laquelle un échantillon tissulaire plan, notamment des sections congelées ou incorporées dans de la paraffine, des frottis cellulaires, cytospin ou similaires est soumis à une ou des colorations d'identification différentes, notamment complètes et de préférence de grande étendue, des noyaux cellulaires, notamment de tous les noyaux cellulaires,
- dans laquelle au moins une coloration de structure cible d'objets cellulaires, spécialement de cytoplasmes et/ou de membranes cellulaires et/ou noyaux cellulaires et/ou d'autres paramètres cytologiques de l'échantillon tissulaire est effectuée,
- dans laquelle des images digitales, notamment des images colorées ou en niveau de gris des échantillons tissulaires colorés sont prises au moyen d'un enregistreur d'images électronique, par exemple un microscope à balayage laser, une camera CCD, une camera digitale ou vidéo, un photo scanner ou autres appareils similaires
- dans laquelle au moins une image d'un segment de l'échantillon tissulaire est représentée avec au moins une coloration ou une combinaison choisissable de colorations
**Caractérisé par le fait,**
- **qu'**au moins un paramètre, par exemple la tonalité de couleur, l'aire, la forme, le circonférence, l'intensité de coloration, le type de coloration ou similaire, qui identifie dans l'image de ce segment des noyaux cellulaires par coloration d'identification et au moins un paramètre, par exemple la tonalité de couleur, la surface, la forme, le circonférence, l'intensité de coloration, le type de coloration ou similaire, qui identifie des objets cellulaires par coloration de structure cible sont restreints à une gamme de valeurs affectée ou choisissable,
- **que** des noyaux et des objets cellulaires, dont le paramètre appartient à la gamme de paramètres respective, sont déterminés en appliquant des algorithmes de traitement d'image à l'image de ce segment et, le cas échéant, représentés,
- **que** le cas échéant, en utilisant des algorithmes de traitement d'image, les paramètres déterminés des noyaux et objets cellulaires dans l'image du segment sont présentés les uns en fonction des autres sous forme d'histogrammes et de diagrammes de dispersion et le cas échéant, en fonction des résultats de mesure, de nouvelles gammes de paramètres sont définies.
- **que**, pour la détermination des cellules individuelles présentes, le contenu de l'image déterminé pour les noyaux cellulaires, d'au moins une, de préférence toutes les images, est corrélé avec le contenu de l'image déterminé pour les objets cellulaires colorés pour la structure cible d'au moins une, de préférence toutes les images, -en considérant le cas échéant la surface d'au moins un objet parmi des objets cellulaires colorés pour la structure cible, déterminée par au moins une coloration de structure cible comprenant le cytoplasme et/ou la membrane cellulaire- en initiant, avec l'algorithme de calcul prédéfini, une croissance ou un élargissement cellulaire émanant des noyaux cellulaires identifiés pour la reconstruction des cellules individuelles, par laquelle, de préférence en considérant les valeurs maximales et minimales des paramètres cellulaires, particulièrement pour la taille ou le diamètre cellulaire, une surface cellulaire est édifiée autour des noyaux cellulaires, et ceci en tenant compte du critère que les surfaces cellulaires voisines ne fusionnent pas et un contact des surfaces et/ou bordures cellulaires déterminées est exclu, en définissant, le cas échéant, la limitation des objets cibles déterminés comme la limitation des cellules individuelles reconstruites et
- **que** le nombre ou la surface et/ou l'intensité de coloration concernant au moins une des colorations effectuées et/ou d'autres paramètres des cellules individuelles reconstruites sont déterminés et/ou les cellules individuelles sont classifiées en populations, le cas échéant en fonction de leur intensité de coloration et/ou d'autres paramètres choisis, et éventuellement examinées ou analysées plus en détails ou représentées.

2. Un processus, d'après la revendication 1, **caractérisé par le fait que** des images des noyaux cellulaires déterminés et/ou des objets cellulaires déterminés sont affichées séparément ou en superposition ou dans la meme image.

3. Un processus, d'après la revendication 1 ou 2, **caractérisé par le fait que** des paramètres choisis, de préférence la taille et/ou la forme et/ou l'intensité de coloration, des noyaux cellulaires identifiés et/ou des objets cellulaires identifiés et/ou des cellules individuelles reconstruites, et/ou le nombre de noyaux cellulaires identifiés et/ou d'objets cellulaires identifiés et/ou des cellules individuelles reconstruites sont affichés en confrontation les uns en fonction des autres sous forme d'histogrammes et de diagrammes de dispersion.

4. Un processus, d'après une des revendications 1 à 3, **caractérisé par le fait que** des colorations d'identification et/ou des colorations de structure cible sont effectuées par colorations d'ADN et/ou colorations par anticorps et/ou colorations d' anti-sera et/ou diffusions de couleurs et/ou réactions colorées chimiques et/ou colorations par sondes génétiques, et/ou des objets cellulaires dans la cellule ou des structures attachées à sa surface, noyaux cellulaire, cytoplasme, membrane cellulaire, marqueur tumoral, cytokine, facteur de croissance, ions, protéines spécifiques, segments d'ADN ou autres sont colorés.

5. Un processus, d'après une des revendications 1 à 4, **caractérisé par le fait que**, par détermination des dépendances des paramètres d'un noyau cellulaire et/ou objets cellulaires et/ou des dépendances des cellules reconstruites, de préférence la taille et/ou la forme et/ou l'intensité de coloration, mutuellement et/ou des dépendances du nombre et/ou de la distribution des noyaux cellulaires et/ou des objets cellulaires et/ou par détermination des barycentres de la distribution ou des populations des noyaux cellulaires et/ou des objets cellulaires, particulièrement par représentation des valeurs des paramètres déterminées pour les cellules individuelles reconstruites en diagrammes de dispersion et histogrammes, des valeurs spécifiques sont déterminées pour la restriction ou sélection des gammes de valeurs pour les paramètres utilisés pour afficher les noyaux cellulaires colorés pour l'identification et/ou les objets cellulaires colorés pour la structure cible avant ou pour la réalisation des croissances cellulaires et/ou que ces dépendances, en particulier les intensités de coloration dans les canaux de détection respectifs, sont utilisées pour l'évaluation les cellules individuelles.

6. Un processus, d'après une des revendications 1 à 5, **caractérisé par le fait que**, d'après la corrélation des images elles-mêmes tirées d'une section d'échantillon tissulaire et la reconstruction des cellules individuelles pour cette section, les valeurs ou gammes de paramètre déterminées et employées sont utilisées pour l'exploitation des images des sections résiduaires de ces échantillons tissulaires et/ou d'autres échantillons tissulaires correspondants.

7. Un processus, d'après une des revendications 1 à 6, **caractérisé par le fait que**, la norme/détermination ou restriction d'une valeur ou gamme de paramètres pour un objet cellulaire coloré pour la structure, notamment pour chaque coloration disponible, s'effectue par marquage d'un objet cellulaire représenté (noyau, cytoplasme, membrane cellulaire) ou d'un objet cellulaire considéré comme cellule individuelle avant et/ou après l'exécution de la reconstruction cellulaire, en évaluant l'intensité de coloration, la tonalité de couleur, la taille et/ou la forme de cette cellule individuelle et en fonction de la représentation évaluée des objets cellulaires de ce paramètre fixé, une nouvelle valeur ou gamme de paramètres est affectée ou choisie.

8. Un processus, d'après une des revendications 1 à 7, **caractérisé par le fait que**, émanant des noyaux cellulaires avec l'algorithme de calcul employé, une reconstruction cellulaire est lancée sous forme de croissance cellulaire jusqu'à ce que la paroi cellulaire atteigne un point de l'image ou un objet dans l'image de la section de tissu, dont un paramètre correspond a un paramètre d'un objet cellulaire dont la structure n'est pas colorée ou d'autres objets dans la section et/ou jusqu'à ce qu'une valeur affectée de paramètre soit dépassée et/ou jusqu'à ce qu'un secteur de croissance cellulaire corrélé avec un noyau cellulaire voisin soit atteint.

9. Un processus, d'après une des revendications 1 à 8, **caractérisé par le fait que**, les cellules individuelles identifiées, notamment d'après des paramètres ou gammes de paramètres fixés dans l'image digitale affichée d'un échantillon tissulaire, le cas échéant dans les images séparées pour les colorations individuelles, sont sélectionnées ou marquées.

10. Un processus, d'après une des revendications 1 à 9, **caractérisé par le fait:**
- **qu'**avant la représentation des noyaux et objets cellulaires et avant la reconstitution cellulaire, une restriction ou nouvelle définition des paramètres, notamment d'intensités de couleur ou taille, s'effectue, entre une telle nouvelle définition ou restriction une représentation et évaluation des images corrélées avec les valeurs de paramètres précédentes définies s'effectue, et/ou
- **que** des paramètres, spécialement la taille et forme d'une cellule, sont dérivés des paramètres, notamment la surface, la tonalité et intensité de couleur des objets cellulaires colorés pour la structure cible, pour la reconstruction cellulaire.

11. Un processus, d'après une des revendications 1 à 10, **caractérisé par le fait:**
- **que** lors d'une coloration cytoplasmique, un processus de grandissement émanant des noyaux cellulaires commence, lequel continue jusqu'à ce qu'un point de l'image qui ne correspond pas a la tonalite de couleur choisie soit atteint, ou jusqu'à ce que les limites de tolérance pour la taille soient dépassées, ou jusqu'à ce qu'un objet appartenant au noyau cellulaire voisin soit atteint,
- **que** lors d'une coloration de membrane cellulaire, un agrandissement cellulaire émanant de la membrane nucléaire dans toutes les directions ou dans la section est interrompu quand la paroi cellulaire rencontre soit une section ou objet cellulaire coloré qui correspond à la couleur de la membrane, soit un objet cellulaire croissant, considérant que, le cas échéant, une intrusion de la paroi cellulaire croissante dans la section colorée de la membrane est admise dans une dimension fixée.

12. Un classement pour une examination, notamment l'identification, de cellules présentes dans des complexes cellulaires denses ou clos qui existent sous forme d'un échantillon tissulaire plan (2), en particulier des sections congelées ou incluses dans de la paraffine, des smears cellulaires, cytospin, ou similaires, et qui sont soumises à une ou un nombre de différentes, en particulier complètes, de préférence de grande étendue, colorations d'identification des noyaux cellulaires, notamment tous les noyaux cellulaires, et au moins une coloration de structure cible d'objets cellulaires différant de la (des) coloration (s) d'identification, notamment cytoplasme et/ou membrane cellulaire et/ou noyaux cellulaires et/ou autres paramètres cytologiques,
- l'agencement comporte un équipement de prise de vue électronique (3), par exemple un microscope à balayage laser, une camera CDD, une camera digitale ou vidéo, un photo scanner ou similaire, pour la prise d'images digitales, notamment des images en couleurs ou niveau de gris des échantillons tissulaires colorés, et est connecté à au moins une unité d'image ou unité de calcul pour la représentation d'au moins une image d'au moins une section de l'échantillon tissulaire dans au moins une coloration et/ou dans au moins une combinaison choisie des colorations, notamment pour la réalisation du processus d'après une des revendications 1 à 11, **caractérisé par le fait,**
- **que** l'unité de calcul/informatique (5) est ajustée pour la représentation et élaboration aussi bien que le mesurage des objets cellulaires représentés sur les images et comporte une unité de limitation des paramètres (7), avec laquelle au moins un paramètre, par exemple la tonalité de couleur, la surface, la forme, le périmètre, l'intensité de couleur, le modèle de couleur ou similaire, qui identifie par coloration d'identification des noyaux cellulaires dans l'image de la section (11, 11') et au moins un paramètre, par exemple la tonalité de couleur, la surface, la forme, le périmètre, l'intensité de couleur, le modèle de couleur ou similaire, qui identifie par coloration de structure cible des objets cellulaires dans l'image d'une section (12, 12') dans une gamme de valeurs prédéterminée ou choisie avec une unité d'entrée sont restreints.
- **que** des noyaux (11, 11') et objets cellulaires (12, 12'), dont les paramètres correspondent à la (aux) gamme(s) de paramètres respective (s) sont déterminés par l'unité de calcul/informatique en employant des algorithmes de traitement d'image pour l'image de cette section, et, le cas échéant, notamment quand identifiés distinctement, sont représentés,
- **que** l'agencement pour la détermination des cellules individuelles présentes, comporte une unité de corrélation (10), avec laquelle le contenu des images déterminé pour les noyaux cellulaires d'au moins une, de préférence toutes les image(s), est corrélé avec le contenu des images déterminé pour des objets cellulaires colorés pour la structure cible d'au moins une, de préférence toutes les images, considérant au moins une étendue de surface fixée des objets cellulaires colores pour la structure cible émanant des noyaux cellulaires identifiés avec un algorithme de calcul fixé par au moins une coloration de structure cible enregistrée le cytoplasme et/ou les membranes cellulaires , une croissance cellulaire est introduite pour la reconstruction des cellules individuelles par laquelle, considérant de préférence les valeurs maximales et minimales des paramètres cellulaires, notamment la taille ou le diamètre cellulaire, une surface cellulaire est à chaque fois édifiée autour des noyaux cellulaires, et en tenant compte du critère,
- **que** le nombre, la surface et/ou l'intensité de couleur concernant au moins une des colorations effectuées et/ou autres paramètres des cellules individuelles reconstruites sont relevés avec l'unité de calcul (5) et/ou les cellules individuelles, sont représentées le cas échéant en fonction de leurs intensités de coloration et/ou d'autres paramètres choisis et/ou leurs données enregistrées.

13. Un agencement conforme à la revendication 12, **caractérisé par le fait que** l'équipement de prise de vue électronique (3) comporte plusieurs canaux de détection (4) pour la prise d'images de l'échantillon tissulaire (2) avec différentes colorations.

14. Un agencement conforme à la revendication 12 ou 13, **caractérisé par le fait que**, avec l'unité de reproduction (5), des paramètres choisis, de préférence la taille et/ou forme et/ou intensité de coloration, des noyaux cellulaires identifiés et/ou des objets cellulaires identifiés et/ou des cellules individuelles reconstruites et/ou le nombre de noyaux cellulaires identifiés et/ou le nombre d'objets cellulaires identifiés et/ou des cellules individuelles reconstruites sont représentables sous forme d'histogrammes et/ou de diagrammes de dispersion confrontés les uns en fonction des autres.

15. Un agencement conforme à une des revendications 12 à 14, **caractérisé par le fait, que** les cellules individuelles reconstruites dans l'image digitale représentée de l'échantillon cellulaire, le cas échéant dans des images séparées pour les colorations individuelles, sont choisies/sorties ou **caractérisées** avec l'unité de reproduction (5).
